# EUROPÄISCHE PATENTANMELDUNG

(11) **EP 0 989 396 A2**
(43) Veröffentlichungstag der Anmeldung: **29.03.2000**
(21) Anmeldenummer: 99118905.1
(22) Anmeldetag: 24.09.1999
(51) Int. Cl.: G01M 3/00, G01M 3/38

(54) **Vorrichtung und Verfahren zur kontrolle und Überwachung der Dämmung von Mantelrohren**

(30) Priorität: 24.09.1998 DE 19843974
(71) Anmelder: GESO Gesellschaft für Sensorik, Geotechnischen Umweltschutz und Mathematiche Modellierung mbH Jena, 07743 Jena (DE)
(72) Erfinder: Grosswig, Stephan, Dr. rer. nat., 07749 Jena (DE); Berger, Wolfgang, Dr.-Ing., 99423 Weimar (DE); Herbst, Andreas, Dipl.-Ing., 01462 Altfranken (DE)
(74) Vertreter: Kruspig, Volkmar, Dipl.-Ing.

(57) **Zusammenfassung**

Die Erfindung bezieht sich auf ein textiles Flächengebilde zur Temperaturmessung zur Kontrolle und Überwachung der Dämmung von Mantelrohrabschnitten, wobei in einer Matte Temperatursensoren angeordnet sind. Die Temperaturmessung erfolgt faseroptisch durch Messung der temperaturabhängigen Anti-Stokes-Linie in einem Lichtwellenleiter bzw. mit anderen bekannten Temperaturmeßverfahren. Die Temperaturmeßmatte wird umfangsseitig um den zu messenden Rohrabschnitt gelegt und befestigt. Die Temperaturmessung erfolgt kontinuierlich oder sequentiell, wobei während des Ausbildens der Dämmung ein zeitlicher Temperaturverlauf aufgezeichnet wird. Aus diesem Temperaturverlauf wird auf den Zustand der Dämmung geschlossen. Ein Verbleiben der Temperaturmeßmatte am Meßort kann vorgesehen sein, um diesen# auch nach einem Verfüllen eines Verlegegrabens hinsichtlich seiner Temperatur überwachen zu können.

## Beschreibung

Die vorliegende Erfindung betrifft eine Vorrichtung zur Kontrolle und Überwachung der Dämmung von Mantelrohrabschnitten, insbesondere im Muffenbereich gemäß dem Oberbegriff des Anspruchs 1, sowie ein Verfahren gemäß Anspruch 20 und die Verwendung eines eine Temperaturerfassungseinrichtung enthaltenden Flächengebildes zu dem genannten Zweck.

Mantelrohre werden auf vielfältigem Gebiet eingesetzt: Werkmäßig gedämmte Rohre finden eine breite Anwendung bei der Wasserversorgung, für Kühlanlagen, beim Öltransport und bei Anlagen der chemischen Industrie, sowie insbesondere auch für Fernwärmeleitungen. Derartige Rohre werden entweder direkt im Erdreich, in Gebäuden oder im Freien verlegt, wobei vor allem bei einer Verlegung im Erdreich die Kontrolle und Überwachung des Zustands des Rohrs im allgemeinen und des Zustands einer Dämmung im besonderen problematisch ist. Einen besonderen Problembereich bilden hierbei die Verbindungsstellen von Rohren, bei welchen zunächst die Mediumrohre miteinander verschweißt werden und der Bereich um die Mediumrohre anschließend gedämmt wird. Das Anbringen einer Dämmung erfolgt nach vorgegebenen Normen und Richtlinien. Im wesentlichen wird hierbei eine Überschubmuffe oder dergleichen über die gereinigten Mantelrohrenden an der Verbindungsstelle zweier werkmäßig gedämmter Rohre geschoben, mit diesen verschweißt oder auf diesen in sonstiger abdichtender Weise festgelegt und anschließend wird der Hohlraum zwischen dem Mediumrohr und der Überschubmuffe durch ein Loch in der Überschubmuffe mit Polyurethan-Hartschaum oder einem anderen geeigneten Material ausgefüllt, insbesondere ausgeschäumt.

Das Ausschäumen des Hohlraums muß äußerst sorgfältig durchgeführt werden, da die Dämmung mit dem Mediumrohr und dem Mantelrohr einerseits kraftschlüssig verbunden sein muß, andererseits die zulässige Aufweitung des Mantelrohrs beim Dämmvorgang 2% nicht überschreiten darf. Darüber hinaus ist die Wärme-Kältdedämmung im Muffenbereich durch eine unzureichende Ausschäumung deutlich verschlechtert und es entstehen Kälte- bzw. Wärmebrücken, durch die das im Mediumrohr fließende Fluid hinsichtlich seiner Temperatur beeinflußt wird. Es ist daher von entscheidender Bedeutung, daß die Menge an Polyurethan-Schaum (PU-Schaum) exakt bemessen und richtig verteilt homogen in den Hohlraum geschäumt wird. Die Problematik hierbei ist, daß das Schäumergebnis aufgrund der geforderten Materialart und -beschaffenheit keiner Sichtprüfung zugänglich ist und ein Temperaturleck zumeist erst nach einer vollständigen Fertigstellung eines Rohrleitungssystems nach der Inbetriebnahme offenbar wird. Diese Tatsache ist insbesondere bei Fernwärmeleitungen problematisch, die zu diesem Zeitpunkt dann oft bereits im Erdreich verlegt sind.

Die DE 195 09 129 schlägt ein Verfahren und eine Vorrichtung zur Kontrolle und Überwachung des Zustands von Rohren, Behältern, Pipelines und dergleichen vor, wobei durch Feststellen der Umgebungstemperaturverteilung des die Pipeline umgebenden Bereichs mittels eines langgestreckten, faseroptischen Temperatursensors eine örtliche Anomalie in der Temperaturverteilung festgestellt und aufgrund dieser auf ein Leck geschlossen wird. Hierbei wird die Tatsache ausgenutzt, daß bei einem Leck in der Regel in bezug auf das umgebende Erdreich veränderte Temperaturwerte auftreten, die mittels eines faseroptischen Temperaturmeßverfahrens mit angeschlossener elektronischer Auswertung detektiert werden können.

Mit diesem in der DE 195 09 129 beschriebenen Verfahren ist es zwar möglich, ein Leck aufgrund des Vorhandenseins einer Temperaturdifferenz zum umgebenden Erdreich und dementsprechend auch ein Temperaturleck relativ ortsgenau festzustellen, wobei jedoch auch hier das vorgenannte Problem zum tragen kommt, daß die überwachte Rohrleitung bereits im Betrieb und zumeist fest im Erdreich verlegt ist, so daß notwendige Reparaturarbeiten sehr aufwendig und kostenintensiv sind.

Der vorliegenden Erfindung liegt dementsprechend die Aufgabe zugrunde, eine Vorrichtung und ein Verfahren zur Verfügung zu stellen, die es ermöglichen, die Dämmung von Mantelrohrabschnitten, insbesondere im Muffenbereich bereits bei der Herstellung der Dämmung qualitativ zu bewerten und/oder auch nach der Verlegung zu überwachen.

Die Aufgabe der Erfindung wird mit einer Vorrichtung gemäß den Merkmalen des Patentanspruches 1 und mit einem Verfahren gemäß der Lehre nach Patentanspruch 20 gelöst. Weitere vorteilhafte vorrichtungs- und verfahrensseitige Ausführungsformen und Weiterentwicklungen sind in den Unteransprüchen gezeigt.

Der grundlegende Gedanke der Erfindung besteht darin, daß mit einer Vorrichtung gemäß dem Patentanspruch 1 eine Temperaturerfassungseinrichtung zur Verfügung gestellt wird, mit der es möglich ist, einen Mantelrohrabschnitt, insbesondere im Muffenbereich hinsichtlich seiner Temperatur zu kontrollieren und zu überwachen. Aus der während der Herstellung der Dämmung gemessenen Temperatur kann ein Rückschluß auf den Zustand der Dämmung gezogen werden.

Gemäß einem weiteren Aspekt der Erfindung wird die gemessene Temperatur des exothermen Vorgangs bei dem Abbinden oder Aushärten des Dämmstoffes in ihrem zeitlichen Verlauf aufgezeichnet, so daß anhand eines sich aus diesen Meßdaten ergebenden Diagramms sofort ein Temperaturanstieg oder ein Temperaturabfall registriert werden kann. Aus einem solchen Temperaturanstieg oder -abfall kann direkt auf den Zustand der Dämmung von Mantelrohrabschnitten geschlossen werden.

Gemäß einem weiteren Aspekt der Erfindung wird demnach die beanspruchte Vorrichtung zur Kontrolle und Überwachung des Herstellungsverfahrens der Dämmung von Mantelrohrabschnitten, insbesondere im Muffenbereich verwendet. Eine besonders vorteilhafte Verwendung der erfindungsgemäßen Vorrichtung ist hierbei die Anwendung der Erfindung im Baustellenbereich, d. h. bei der Verlegung von Mantelrohren, und hierbei insbesondere bei der Verbindung von zwei Rohrabschnitten, wobei die Medienrohre zunächst verschweißt werden und eine anschließende Dämmung zwischen Mediumrohr und Mantelrohr erst auf der Baustelle angebracht wird. Die bei der Ausschäumung des Hohlraums zwischen den beiden Rohren mit PU-Schaum entstehende exotherme Reaktionsenthalpie wird mittels der erfindungsgemäßen Vorrichtung gemessen und aufgezeichnet. Durch ein Auswerten des Temperaturverlaufs kann ein direkter Rückschluß auf den Zustand der Dämmung sowie auf die Menge des zum Ausschäumen verwendeten PU-Schaums gezogen werden.

Gemäß einem weiteren Aspekt der Erfindung wird zur Auswertung des Zustands der Mantelrohrdämmung der Mittelwert der in dem relevanten Meßbereich gemessenen Temperatur herangezogen. Auf diese Weise kann aus einem einzigen zeitlichen Temperaturverlauf auf den Zustand der Dämmung des Mantelrohrabschnitts geschlossen werden.

Gemäß einem weiteren Aspekt der Erfindung wird eine Temperaturmessung an verschiedenen Stellen des jeweiligen Meßbereichs und insbesondere im Muffenbereich, dessen Dämmung während der Temperaturmessung hergestellt wird, durchgeführt. Durch die Verwendung einer erfindungsgemäßen Vorrichtung mit einer faseroptischen Temperaturerfassungseinrichtung läßt sich eine ortsabhängige Temperaturmessung in besonders vorteilhafter Weise durch die Auswertung der laufzeitabhängigen Streulichtimpulse durchführen. Im Fall einer Temperaturmessung an verschiedenen Temperaturmeßstellen wird durch die Auswertung der laufzeitabhängigen Streulichtimpulse eine der Anzahl der Meßstellen entsprechende Anzahl von orts- und zeitabhängigen Temperaturverläufen erhalten. Hierdurch wird die Beurteilung des Zustands der Dämmung wesentlich verfeinert, so daß eine mangelhafte Dämmung gezielt nachgebessert werden kann.

Gemäß einem weiteren Aspekt der Erfindung kann die faseroptische Temperaturmeßvorrichtung, die zur Kontrolle des Herstellungsverfahrens der Dämmung im Muffenbereich eines Mantelrohrabschnitts angebracht und verwendet worden ist, an den betreffenden Rohrabschnitten belassen werden, wobei bei einer Verlegung im Erdreich die frei zugänglichen Enden der Lichtwellenleiter benachbarter Meßstellen vor einer Verfüllung des Verlegegrabens optisch gekoppelt werden. Auf diese Weise läßt sich die Kontrolle und Überwachung der Dämmung von Mantelrohrabschnitten, die vorzugsweise im Muffenbereich der Verbindung von zwei Mantelrohren äußerst wünschenswert ist, auch während des Betriebs des entsprechenden Rohrsystems aufrechterhalten. Hierbei werden dem gesamten Lichtwellenleiter, der durch das Zusammenkoppeln der ursprünglichen einzelnen Lichtwellenleiter der erfindungsgemäßen Vorrichtungen hergestellt worden ist, definierte laufzeitabhängige Ortskoordinaten zugeordnet. Bei einer derartigen Anordnung ist im jeweiligen Rohrabschnitt, insbesondere Muffenbereich eines Rohrsystems die räumliche Dichte des zur Temperaturmessung verwendeten Lichtwellenleiters stark erhöht, so daß die Verbindungsstellen von zwei Rohren hinsichtlich ihrer Dämmung optimal vor Ort überwacht werden können.

Ein weiterer Aspekt der Erfindung besteht darin, dem Lichtwellenleiter Längenkoordinaten zuzuweisen, die entsprechend der Anordnung des Lichtwellenleiters in einer Temperaturmeßmatte spezifischen Flächenkoordinaten dieser entsprechen.

Die erfindungsgemäße Vorrichtung und das erfindungsgemäße Verfahren bieten somit den grundlegenden Vorteil die Dämmung von Mantelrohren bereits während ihres Herstellungsprozesses aber auch im Betrieb zu überwachen.

Erfindungsgemäß werden Matten mit einer vorgegebenen räumlichen Lichtwellenleiterdichte zur Verfügung gestellt, wobei die Anordnung des zumindest einen Lichtwellenleiters in einer Matte so ausgebildet ist, daß die gesamte Matte von dem Lichtwellenleiter durchzogen ist. Der Verlauf des/der verwendeten Lichtwellenleiter(s) ist der Form der Temperaturmeßmatte angepaßt, vorzugsweise jedoch mäanderförmig.

Es sei an dieser Stelle erwähnt, daß auch eine Vielzahl von Einzelsensoren, die in ihrer Wirkung der eines langgestreckten Sensors entsprechen, z.B. entsprechend verschaltete Pt-100-Thermoelemente, zur Temperaturmessung einsetzbar sind.

Die Erfindung wird nachstehend anhand von Ausführungsbeispielen und Figuren näher erläutert. Die Zeichnungen zeigen im einzelnen folgendes:
- Fig. 1: eine schematische Ansicht eines erfindungsgemäßen Flächengebildes, das über einer Überschubmuffe eines Mantelrohrs angebracht ist;
- Fig. 2: eine schematische Ansicht eines erfindungsgemäßen Flächengebildes, wobei beispielhaft ein Lichtwellenleiter eingezeichnet ist;
- Fig. 3: ein Diagramm, das schematisch einen zeitlichen Temperaturverlauf wiedergibt, der beispielsweise während der Herstellung einer Dämmung aufgezeichnet wird;
- Fig. 4: eine schematische Ansicht eines erfindungsgemäßen Flächengebildes;
- Fig. 5: eine schematische Ansicht einer weiteren Ausführungsform eines erfindungsgemäßen Flächengebildes.

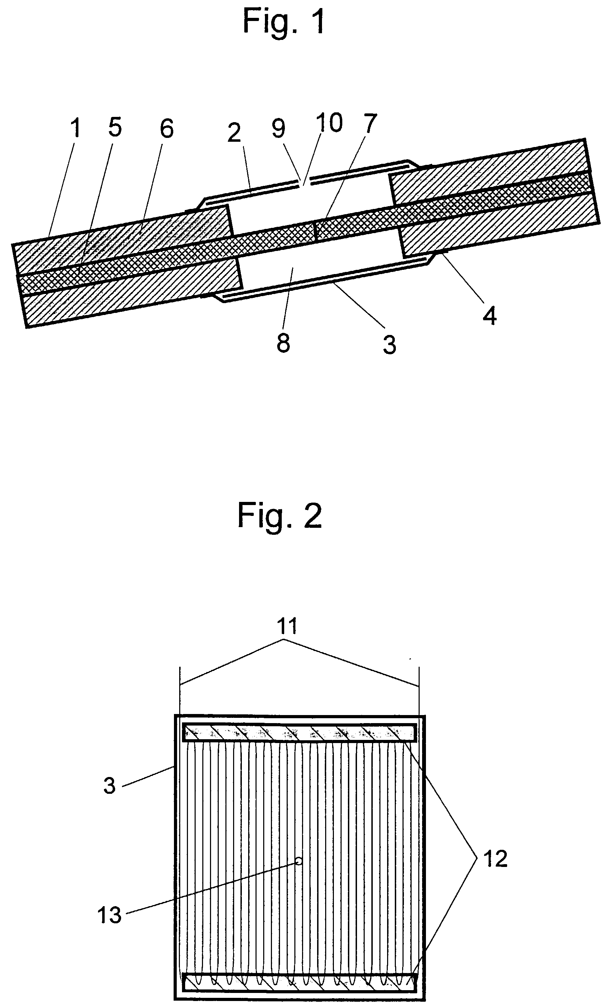

Fig. 1 zeigt eine beispielhafte Verwendungsform der erfindungsgemäßen Vorrichtung. Bei dem hier gezeigten Beispiel ist das erfindungsgemäße Flächengebilde, insbesondere eine Temperaturmeßmatte 3 um eine (Überschub-)Muffe 2 gelegt, die über den Enden zweier Mantelrohre 1 angeordnet ist. Bei der gezeigten Ausführungsform umschließt die Temperaturmeßmatte 3 die Überschubmuffe 2 und ist mittels eines Klettverschlusses oder dergleichen an dem Mantelrohr 1 (bzw. der Dämmung 6)temporär befestigt. Zu diesem Zweck wird ein selbstklebendes erstes Teil des Klettverschlusses, beispielsweise in Form eines Bandes, im vorgesehenen Verbindungsbereich 4 umfangsseitig um das Mantelrohr 1 geklebt, so daß das zugehörige zweite Teil des Klettverschlusses bei einem Anlegen der Matte an das Mantelrohr mit dem ersten Teil des Klettverschlusses einhaken kann. Auf diese Weise läßt sich eine fest anliegende, innige Verbindung der Temperaturmeßmatte 3 mit der Überschubmuffe 2 herstellen. Anstelle eines Klettverschlusses zur Befestigung der Temperaturmeßmatte 3 am Mantelrohr 1 ist jedoch auch beispielsweise ein Riemen mit Schnalle oder dergleichen, eine Manschette oder ein wieder lösbarer Klebstoff einsetzbar. Es sei noch angemerkt, daß die Medienrohre 5 durch eine Schweißnaht 7 ein von dem Ausschäumen dämmungsfreien Raum 8 verbunden sind.
Falls, entsprechend einer Ausführungsform der Erfindung, ein Verbleiben der Temperaturmeßmatte 3 auch nach dem Ausschäumen des Hohlraums zwischen Mantelrohr 1 und Mediumrohr im Bereich der Muffe 2 gewünscht ist, kann die Temperaturmeßmatte 3 auch dauerhaft mit dem Mantelrohr 1 verbunden werden.

Entsprechend einer andereren Ausführungsform der Erfindung kann die Temperaturmeßmatte 3 an der Überschubmuffe 2 selbst befestigt werden oder Bestandteil dieser sein. In diesem Fall werden z. B. die oben beschriebenen Befestigungsmöglichkeiten der Temperaturmeßmatte 3 direkt an der Muffe 2 angewandt.

Fig. 2 zeigt eine Ausführungsform der vorliegenden Erfindung, bei der ein Lichtwellenleiter 5 mäanderförmig in einer Temperaturmeßmatte 3 eingebettet ist. Die beiden Enden des Lichtwellenleiters 5 sind hierbei außerhalb der Temperaturmeßmatte 3 befindlich, so daß diese von außen frei zugänglich sind. Bei dieser Ausführungsform der Erfindung wird die Temperaturmeßmatte 3 ringförmig umfangsseitig um den Muffenbereich gelegt, und ihre Enden, die jeweils mit einem ersten Teil eines Klettverschlusses und mit dem zugehörigen zweiten Teil eines Klettverschlusses versehen sind, werden miteinander verbunden. Bei dieser Methode, bei der die Querränder der Temperaturmeßmatte jeweils miteinander verbunden werden, kann zur Verbindung der Querränder auch ein Reißverschluß, Druckknöpfe oder eine sonstige Verbindungseinrichtung zum Festlegen der Matte 3 um die Muffe 2 vorgesehen sein. Wie in Fig. 2 angedeutet, ist ein erster Teil des Klettverschlusses oder der Druckknöpfe oder dergleichen auf der Oberseite der Temperaturmeßmatte 3 und der zugehörige zweite Teil des Klettverschlusses oder der Druckknöpfe oder dergleichen an der Unterseite gegenüberliegenden Seite der Temperaturmeßmatte 3 angeordnet, so daß diese an ihren Querrändern ringförmig verbindbar ist. Denkbar sind auch Knöpfe mit Knopflöchern auf der entsprechenden gegenüberliegenden Seite der Matte 3. Das Material der Matte 3 besteht bevorzugt aus einem textilen oder Kunststoffgewebe mit elastischen Eigenschaften, so daß unter Rückgriff auf die Verbindungseinrichtung die Muffe 2 enganliegend umschlossen wird.
Wie in Fig. 2 weiterhin erkennbar, ist in der Temperaturmeßmatte 3 eine Aussparung oder Öffnung 13 vorgesehen. Diese Aussparung 13 (9 in Figur 1) dient dazu, zusammen mit einer Öffnung 10 in der Muffe 2 einen Zugang zu dem Hohlraum zwischen Medienrohr und Mantelrohr zur Verfügung zu stellen, durch welche PU-Schaum oder ein sonstiges geeignetes Füllmaterial eingebracht werden kann.

An dieser Stelle sollte betont werden, daß anstelle einer Überschubmuffe auch eine mehrteilige Muffe, wie z.B. eine Schnellverschlußmuffe oder eine Schweißmantelmuffe ebenso wie eine Schrumpfmuffe oder dergleichen verwendet werden kann.

Mit der in Fig. 2 vorgeschlagenen und gezeigten Verwendung eines Lichtwellenleiters 11 zur Temperaturmessung handelt es sich um eine besonders vorteilhafte Ausführungsform der vorliegenden Erfindung. Die Vorrichtung und das damit zusammenhängende Verfahren zum Bestimmen von Temperaturen an und in ausgedehnten Objekten ist ausführlich in dem deutschen Gebrauchsmuster G 93 18 404.2 offenbart. Das Verfahren verwendet eine optisch-elektronische Meßvorrichtung, die in mindestens einen Lichtwellenleiter an mindestens einem Ende einen Laserimpuls einspeist und welche die vom Lichtwellenleiter zurückgestreute Strahlung zur Bestimmung des Orts der Temperatur laufzeitabhängig und zur Temperaturmessung spektral auswertet, wobei Längenkoordinaten des Lichtwellenleiters Temperaturwerte zugeordnet werden. Die Temperaturmessung beruht hierbei auf dem DTS-Meßverfahren (Distributed Optical Fibre Temperature Sensing), welches wiederum das OTDR-Prinzip (Optical Time-Domain-Reflectometry) ausnutzt. Bei diesem Verfahren wird das Licht eines Impulslasers in einen Lichtwellenleiter eingekoppelt, der mit einer Ummantelung versehen ist. Bei der Ausbreitung des Laserlichtimpulses wird das Licht an den Molekülen des Lichtwellenleiters gestreut. Die Intensität und die spektrale Zusammensetzung des Streulichts ist durch die Art der Moleküle im Lichtwellenleiter und deren Wechselwirkung mit dem Licht bestimmt. Das rückgestreute Licht wird aus dem Lichtwellenleiter ausgekoppelt und über entsprechende Filter auf einen Detektor geführt. Hierbei läßt ein erstes optisches Filter Licht der Stokes-Linie Is durch, während ein zweites optisches Filter Licht der Anti-Stokes-Linie Ia passieren läßt. Der erwähnte Detektor erzeugt dann aus den ihm zugeführten Intensitäten Is und Ia der Stokes-Linie und der Anti-Stokes-Linie Signale, welche an einen Dividierer angelegt werden. Mittels einer Verhältnisbildung der aus den Linien Is und Ia erhaltenen Spannungssignale Us und Ua werden Störeinflüsse, die auf eine Inhomogenität der verwendeten Lichtquelle oder auf andere äußere, den Lichtwellenleiter beeinflussende Umstände zurückzuführen sind, mit Ausnahme der Temperatur eliminiert. Ausgangsseitig ist der Dividierer mit einem Rechner verbunden, welcher in Abhängigkeit der Laufzeit des eingestrahlten Lichtes und damit in Relation zur Längenkoordinate des Lichtwellenleiters Temperaturwerte bestimmt. Mittels des Rechners können also konkreten Punkten bzw. Orten des Lichtwellenleiters Temperaturwerte zugeordnet werden. Das Verhältnis der Intensität der Stokes-Linie Is und der Anti-Stokes-Linie Ia bestimmt dabei den jeweiligen Temperaturwert, während die Längenkoordinaten des Lichtwellenleiters aus der Laufzeit des rückgestreuten Lichtimpulses ermittelt werden. Der jeweilige Temperaturmeßbereich hängt dabei vom verwendeten Sensorkabel ab und liegt im Bereich zwischen 100 K und 750 K. Die Länge des Lichtwellenleiters einer derartigen Vorrichtung beträgt bis zu 20 km und die erreichte Temperaturauflösung liegt im Bereich von 0,1 K.

Ein besonderer Vorteil dieses Verfahrens der Temperaturmessung ist, daß mittels eines einzigen Lichtimpulses die Temperatur gleichzeitig in Abhängigkeit der Laufzeit des Lichtes an mehreren verschiedenen Orten gemessen werden kann. Diese Temperaturwerte können nun entweder einzeln ausgewertet oder für die Ermittlung eines mittleren Temperaturwerts herangezogen werden. Ebenso ist es möglich, über bestimmte Längenkoordinatenbereiche des Lichtwellenleiters die Temperaturwerte zu mitteln, während bei anderen Längenkoordinaten die jeweils diskreten Werte zur Auswertung herangezogen werden. Dies ist insbesondere dann vorteilhaft, wenn eine oder mehrere Temperaturmeßmatten 3, die permanent in einem Muffenbereich angebracht sind, über die frei zugänglichen Lichtwellenleiterenden mit denjenigen der jeweils benachbarten Temperaturmeßmatte verbunden werden und auf diese Weise eine lange, dem Rohrleitungssystem folgende Temperaturüberwachungseinrichtung zur Kontrolle und Überwachung des Rohrleitungssystems, insbesondere im Muffenbereich zur Verfügung gestellt wird.

Ein wesentlicher Vorteil der vorliegenden Erfindung besteht darin, daß es mit der erfindungsgemäßen Temperaturmeßmatte 3 möglich ist, den Temperaturverlauf während der Herstellung der Dämmung im Raum 8 zu messen und aufzuzeichnen. Da für eine solche Messung nur ein einziger Lichtwellenleiter, z.B. ein Glasfaserkabel benötigt wird, ist dies ein sehr kostengünstiges Verfahren, das zudem störunfällig ist. Alternativ können jedoch auch mehrere Lichtwellenleiter, z.B. zur genaueren Ortsbestimmung oder zur Fehlerkorrektur verwendet werden.

Mit den oben bereits beschriebenen Befestigungsmöglichkeiten läßt sich eine erfindungsgemäße Temperaturmeßmatte 3 in sehr einfacher Weise im Muffenbereich zweier zu überbrückender Mantelrohre 1 anbringen. Das Anbringen der Temperaturmeßmatte 3 erfolgt in innigem Kontakt mit der Muffe 2 und/oder dem Mantelrohr 1, um einen guten Wärmeübergang von der Muffe 2 zu der Temperaturmeßmatte 3 zu gewährleisten. Bei der Anbringung der Temperaturmeßmatte 3 ist darauf zu achten, daß die (zumindest eine) Aussparung 9, die in der Temperaturmeßmatte 3 vorgesehen ist, über der Öffnung der Muffe 2 angeordnet ist, um das Dämmmaterial in den Hohlraum 8 zwischen Medienrohr 5 und Mantelrohr 1 einzubringen.

Um die exakte Anbringung der Temperaturmeßmatte 3 zu erleichtern, kann gemäß einer Ausführungsform der Erfindung ein kurzes Rohrstück vorgesehen sein, an dessen Mitte ein flacher Ring derart ausgebildet ist, daß das Rohrstück beim Einsetzen in das Loch der Muffe an dessen Rand gehalten wird, und daß die Temperaturmeßmatte 3 über den nach außen ragenden Teil des Rohrs gestülpt werden kann. Das Rohr weist vorzugsweise einen Durchmesser auf, der das Einbringen des Dämmmaterials nicht behindert, und ist in dem Bereich, der in die Muffe ragt und in dem Bereich, der durch die Temperaturmeßmatte 3 ragt, ausreichend kurz, um auch ein leicht schräges Einbringen des Dämmmaterials zu ermöglichen. Die Entfernung des kurzen Rohrstücks erfolgt nach dem Entfernen der Temperaturmeßmatte, sofern die Temperaturmeßmatte nicht dauerhaft über der Muffe angeordnet bleibt.

Gemäß einer anderen Ausführungsform ist das kurze Rohrstück derart ausgestaltet, daß es zunächst von außen durch die Aussparung in der Temperaturmeßmatte 3 geführt wird und anschließend in die Öffnung der Muffe 2 eingeführt wird. Auf diese Weise kann das kurze Rohrstück noch vor dem Ausschäumen des Hohlraums wieder entfernt werden, so daß der Zugang zu dem auszuschäumenden Hohlraum optimal zugänglich ist. Alternativ kann anstelle eines kurzen Rohrstücks auch ein anderer Gegenstand verwendet werden, der geeignet ist, als Führung für die korrekte Anbringung der Temperaturmeßmatte 3 auf der Muffe 2 zu dienen.

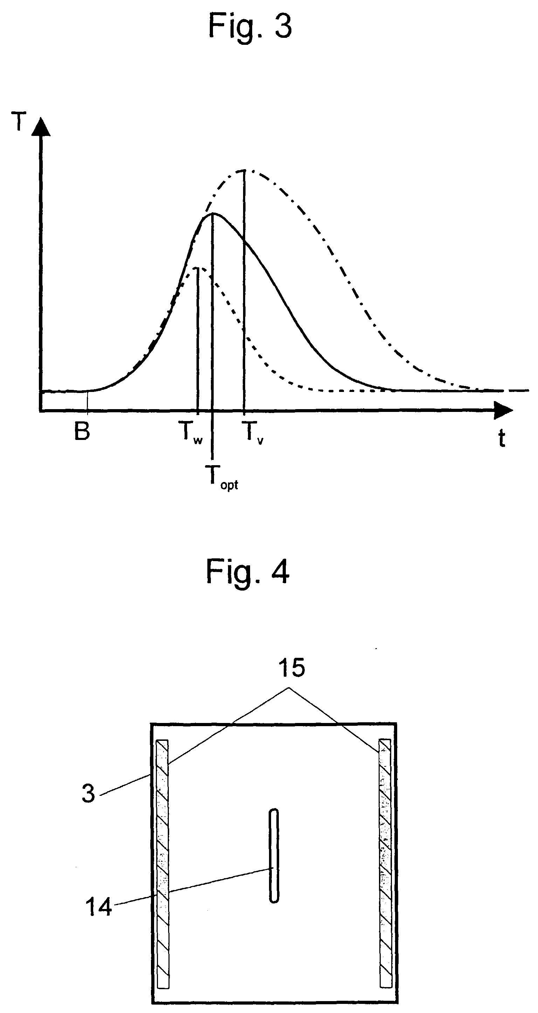

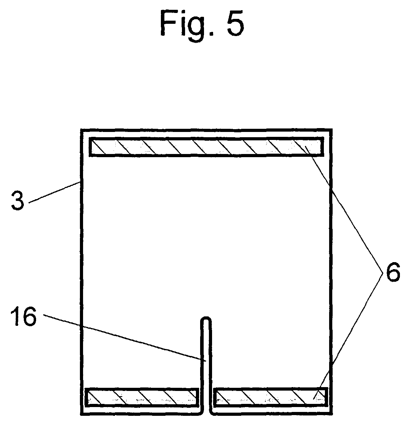

In den Fig. 4 und 5 sind zwei weitere Ausführungsformen der erfindungsgemäßen Temperaturmeßmatte 3 gezeigt. Wie in Fig. 4 zu sehen ist, ist die Aussparung, die in der Temperaturmeßmatte 3 vorgesehen ist, hier als Schlitz 8 ausgebildet. Die Breite des Schlitzes 8 entspricht hierbei im wesentlichen der Weite der Öffnung, da in der Muffe 2 für die Dämmmaterialzuführung vorgesehen ist. In der Fig. 4 ist der Schlitz 8 längs der Wickelrichtung der Temperaturmeßmatte 3 eingezeichnet, wobei auch jede andere Orientierung, z.B. quer oder diagonal zur Wickelrichtung möglich ist. Wie in Fig. 5 zu sehen ist, kann der Schlitz 9 auch einen Randbereich der Temperaturmeßmatte umfassen, wobei auch hier der Schlitz 9 diagonal oder quer ausgebildet sein kann. Die Ausbildung der Aussparung in Form eines Schlitzes bietet den Vorteil, daß die Temperaturmeßmatte 3 leichter auf der Muffe 2 angebracht werden kann, da sie hinsichtlich der notwendigen Übereinstimmung der Aussparung in der Temperaturmeßmatte 3 mit der Öffnung, die in der Muffe 2 zum Zweck der Dämmmaterialzuführung vorgesehen ist, einen größeren Spielraum bietet. Die Verwendung eines oben beschriebenen kurzen Rohrstücks zur exakten Positionierung der Temperaturmeßmatte 3 auf der Muffe 2 ist deshalb nicht nötig.

Die Vorrichtung der vorliegenden Erfindung weist also ein flexibles textiles Flächengebilde auf, in welches Temperaturerfassungssensoren eingearbeitet sind. Vorzugsweise ist das textile Flächengebilde 3 aus einem robusten Material, das auf Zug und Druck, sowie gegen Einreißen unempfindlich ist, wie z.B. aus einem Geotextil. Als Temperaturerfassungssensor dient inbesondere ein Lichtwellenleiter, der in dem textilen Flächengebilde angeordnet ist. Vorzugsweise ist der Lichtwellenleiter in das textile Flächengebilde eingewebt, er kann jedoch auch aufgeklebt, geklammert, festgenäht oder in sonstiger Weise angebracht sein. Anstelle eines Lichtwellenleiters zur Temperaturerfassung können auch viele Einzelsensoren, die flächig auf dem textilen Flächengebilde verteilt angeordnet und befestigt sind, vorgesehen sein. Zum Befestigen des textilen Flächengebildes an einem Mantelrohrabschnitt ist vorzugsweise an den Rändern des textilen Flächengebildes ein Klettverschluß vorgesehen, mittels dem das textile Flächengebilde umfangsseitig um das Mantelrohr zu einem Ring geschlossen wird. Zu diesem Zweck ist es jedoch ebenso möglich, Druckknöpfe, einen Reißverschluß, Klebstoff, Klammern, Haken mit zugehörigen Ösen oder dergleichen zu verwenden. Alternativ ist es auch möglich, das textile Flächengebilde direkt an dem Mantelrohrabschnitt anzubringen. Bei dieser Ausführungsform wird beispielsweise ein selbstklebendes erstes Teil eines vorgesehenen Klettverschlusses an dem Rohr befestigt, so daß das zugehörige zweite Teil des Klettverschlusses an diesem ersten Teil befestigt wird. Auch hier kann jedoch anstelle eines Klettverschlusses beispielsweise ein Klebstoff zur innigen und festanliegenden Befestigung des textilen Flächengebildes auf dem Rohrabschnitt verwendet werden. Ebenso ist es möglich, das textile Flächengebilde mittels Riemen, Seilen oder Manschetten an dem Rohr zu befestigen. Es ist darauf zu achten, daß Endabschnitte der jeweils verwendeten Temperaturerfassungseinrichtung, insbesondere eines Lichtwellenleiters, die zur Verbindung mit einem Detektor bzw. einem Rechner frei zugänglich an dem textilen Flächengebilde vorgesehen sind, auch nach dem Anbringen des textilen Flächengebildes an dem Mantelrohrabschnitt frei zugänglich und ausreichend lang sind. Die Form des textilen Flächengebildes ist nicht näher bestimmt, jedoch ist eine im wesentlichen rechteckige Form besonders vorteilhaft. Es ist jedoch denkbar, daß das textile Flächengebilde die Form eines Bandes oder eine Abwicklung aufweist, mit der kompliziertere Formteile, beispielsweise T-Stücke, Verteiler, Gabelungen oder Ventile und dergleichen zur Erfassung ihrer Temperatur umwickelt werden. Die Anordnung der Temperaturerfassungseinrichtung, insbesondere eines Lichtwellenleiters ist im wesentlichen beliebig, wobei eine Anordnung in Form von Mäandern besonders vorteilhaft ist, bei der die Fläche selbst und ihre Ränder von dem Lichtwellenleiter durchzogen sind. Gemäß einer anderen Ausführungsform ist der Lichtwellenleiter in Form von zwei um 90° gegeneinander verdrehten Mäanderformen ausgebildet. Das textile Flächengebilde, das die Temperaturmeßmatte bildet, kann ein- oder mehrschichtig ausgebildet sein. Bei einer einschichtigen Ausbildung besteht das textile Flächengebilde aus einem Material, das zusammen mit dem Lichtwellenleiter zu einer Matte ausgebildet ist. Gemäß einer Ausführungsform der Erfindung ist das Material des textilen Flächengebildes gut wärmeleitend, so daß bei einer innigen Anlage der Temperaturmeßmatte an der Muffe ein guter Wärmeübergang erfolgt, und daß infolgedessen die in der Temperaturmeßmatte gemessene Temperatur repräsentativ für die Temperatur der Muffe bzw. des Verschäumungsmaterials ist.

Bei einer Zweischicht-Ausführung besteht die Unterseite der Temperaturmeßmatte 3 vorzugsweise aus einem gut wärmeleitenden Material und die Oberseite der Matte aus einem wärmeisolierenden Material. Bei dieser Ausführungsform ist der Lichtwellenleiter entweder in die untere gut wärmeleitende Schicht eingearbeitet, oder er ist gemäß einer weiteren Ausführungsform der Erfindung zwischen der unteren gut wärmeleitenden Schicht und der oberen wärmeisolierenden Schicht angeordnet. Auf diese Weise ist, falls die Temperaturmeßmatte 3 in innigem, einen guten Wärmeaustausch gewährleistenden Kontakt mit der Muffe 2 ist, einerseits gewährleistet, daß die in der Temperaturmeßmatte 3 gemessene Temperatur repräsentativ für die Temperatur der Muffe 2 ist, und mögliche äußere Einflüsse, wie z.B. starke Sonneneinstrahlung, die eine korrekte Temperaturmessung verfälschen würden, werden durch das wärmeisolierende Material der Oberseite der Temperaturmeßmatte abgeschirmt.

Gemäß einer weiteren Ausführungsform der Erfindung besteht die Oberseite der Matte aus einem röhrenförmigen Gebilde, das mäanderförmig auf der Schicht, die die Unterseite der Matte bildet, angeordnet ist und das von einem Fluid durchströmbar ist. Das röhrenförmige Gebilde weist an einem seiner zwei Enden einen Fluidzulauf-Anschluß und an dem anderen Ende einen Fluidablauf-Anschluß auf. Ein Fluid, das vorgesehen ist, das rohrförmige Gebilde zu durchströmen, ist vorzugsweise Wasser, das auf eine einheitliche Temperatur thermostatisiert ist. Es kann jedoch auch jedes andere auf eine bestimmte Temperatur thermostatisierbare Fluid verwendet werden.

Mittels der Zweischicht-Matte, bei der die Oberseite aus einem wärmeisolierenden Material bzw. aus einem rohrförmigen Gebilde besteht, das vorzugsweise von einer Schutzschicht aus einem Textil oder Kunststoff umgeben ist, lassen sich auch unter extremen äußeren Einflüssen exakte Temperaturen der Muffe 2 bestimmen. Im Fall einer Mehrschicht-Temperaturmeßmatte 3 sind die einzelnen Schichten vorzugsweise durch, Verkleben oder Miteinanderverweben miteinander verbunden. Selbstverständlich ist es ebenso so möglich, eine Isolierung der Temperaturmeßmatte 3 durch ein Abdecken der Temperaturmeßmatte 3 in an einem Rohrabschnitt montierten Zustand durch ein Bedecken mit einer zusätzlichen Isoliermatte zu gewährleisten.

Wie bereits oben erläutert, verläuft der Vorgang des Ausschäumens des Hohlraums zwischen Mediumrohr und Mantelrohr exotherm. Die freiwerdende Energie kann in Form von Wärme mittels der erfindungsgemäßen Vorrichtung gemessen werden. Wenn die Temperatur kontinuierlich, d.h. im Falle der Verwendung eines Lichtwellenleiters mit kurzen, aufeinanderfolgenden Laserlichtimpulsen gemessen wird, so läßt sich aus dem zeitlichen Temperaturverlauf der Fortgang der Reaktion beim Ausschäumen verfolgen. Wenn die gemessenen Temperaturwerte über die Zeit aufgetragen werden, so ergibt sich ein Temperaturverlauf, wie er in dem Diagramm in Fig. 3 durch eine der drei dargestellten Kurven wiedergegeben wird. In dem Diagramm in Fig. 3 ist auf der Abszisse die Zeit t und auf der Ordinate die Temperatur T wiedergegeben. Zum Zeitpunkt B beginnt der Vorgang des Ausschäumens. Die Temperatur vor diesem Zeitpunkt entspricht der Umgebungstemperatur bzw. der Temperatur, welche die Muffe vor dem Ausschäumen hat. Nach dem Beginn des Ausschäumens steigt die Temperatur zunächst an, bis sie ein Maximum erreicht. Nach diesem Maximum ist die Reaktion des Ausschäumens im wesentlichen abgeschlossen und die Temperatur der Muffe 2 sinkt wieder auf die Umgebungstemperatur ab. Aus der Dauer des Temperaturanstiegs bzw. aus der Höhe des Temperaturanstiegs kann direkt auf die umgesetzte Menge der Reaktionskomponenten geschlossen werden, wobei die Fläche unter der jeweiligen Kurve direkt proportional zu der entstandenen Wärmemenge und damit zur Menge des gebildeten PU-Schaums ist.

Da es beim Ausschäumen des Hohlraums einer Muffenverbindung zur Vermeidung von Wärme- bzw. Kältebrücken entscheidend darauf ankommt, daß der PU-Schaum den Hohlraum homogen und mit einheitlicher Dichte vollständig ausschäumt, muß eine bestimmte, klar definierte Menge an PU-Schaum in den Hohlraum zwischen Mediumrohr und Mantelrohr geschäumt werden. Bei der Herstellung dieser optimalen Schaummenge entsteht eine definierte Wärmemenge, die mittels der erfindungsgemäßen Vorrichtung gemessen werden kann, und die in Fig. 3 durch die durchgezogene Linie wiedergegeben wird. Die maximale Temperatur, die beim Schäumen der optimalen Schaummenge entsteht, ist durch den Punkt Tₒₚₜ auf der Zeitachse wiedergegeben (durchgezogene Kurve). Wenn zuwenig Schaum zum Ausschäumen des Hohlraums verwendet wird, entsteht dementsprechend weniger Wärme, so daß die Ausschäumreaktion zum einen vor Erreichen der Zeit Tₒₚₜ im wesentlichen beendet ist, was durch den Punkt T_{w} auf der Zeitachse dargestellt ist, und außerdem ist die maximal erreichte Temperatur niedriger als die maximale Temperatur bei Verwendung der optimalen Schaummenge, wie aus der gestrichelten Kurve leicht erkennbar ist.

Dementsprechend dauert die Ausschäumreaktion bei der Verwendung von zuviel Schäummaterial länger als Tₒₚₜ und die bei der Reaktion gebildete Wärmemenge ist entsprechend größer, wie aus dem Integral der Strich-Punkt-Kurve leicht erkennbar ist.

An dieser Stelle sei nochmals erwähnt, daß eine exakt bemessene und homogen verteilte Schaummenge im Hohlraum zwischen Mediumrohr und Mantelrohr von entscheidender Bedeutung ist, da das Mediumrohr mit dem Mantelrohr zum einen kraftschlüssig verbunden sein muß, was bedeutet, daß die Schaummenge so bemessen sein muß, daß der Hohlraum zwischen den Rohren völlig, u.U. sogar mit einem geringen Druck gegen die Rohre gefüllt sein muß. Wenn zuwenig Schaum verwendet wird, wie in Fig. 3 durch die gestrichelte Linie symbolisiert ist, so ist eine ausreichende Ausschäumung nicht gewährleistet. Andererseits darf das Mantelrohr beim Ausschäumen maximal um 2% aufgeweitet werden, da die Belastung des Rohrs durch eine übermäßige Aufweitung unzulässig ansteigt. Außerdem verliert der Schaum bei einer höheren Verdichtung seine optimale Dämmwirkung. Der Fall der Verwendung einer zu großen Schaummenge ist durch die strichpunktierte Linie in Fig. 3 symbolisiert. Die Reaktion ist hier erst im Zeitpunkt Tᵥ im wesentlichen abgeschlossen.

Fig. 3 gibt lediglich den zeitlichen Verlauf der Temperatur während des Ausschäumvorgangs wieder. Sie sagt jedoch nichts darüber aus, wie die örtliche Temperaturverteilung im Muffenbereich ist. Mit der erfindungsgemäßen Vorrichtung ist es jedoch möglich, die Temperatur des Muffenbereichs entweder als Temperaturmittel über den gesamten Muffenbereich zu messen, es können jedoch auch einzelne diskrete Orte hinsichtlich ihres zeitlichen Temperaturverlaufs begutachtet werden, indem den Längenkoordinaten des Lichtwellenleiters Koordinaten der Muffe zugeordnet werden. Auf diese Weise läßt sich ein detailliertes Temperaturprofil der Muffe erstellen, aus dem auf den Zustand der Muffendämmung, respektive auf die Schaummengenverteilung im Hohlraum zwischen Mediumrohr und Mantelrohr geschlossen werden kann. Dementsprechend ergibt sich bei einer detaillierten zeit- und ortsabhängigen Temperaturmessung ein dreidimensionales Diagramm, dessen x-Achse die Zeit, dessen y-Achse die Temperatur und dessen z-Achse den Ort wiedergibt. Ein optimaler Zustand der Muffendämmung ist dann erreicht, wenn der Temperaturverlauf über die Zeit gesehen für alle Orte identisch und von optimaler Höhe ist.

Aufgrund dieser durch die erfindungsgemäße Vorrichtung gegebenen Möglichkeit kann, falls erforderlich, ein gezieltes Nachverschäumen an Orten mit einer unzureichenden Schaummenge erfolgen. Dieses Nachverschäumen kann wiederum mittels der erfindungsgemäßen Vorrichtung detailliert kontrolliert und überwacht werden, wobei, falls dies erwünscht ist, auch eine Temperaturmeßmatte mit kleineren Abmessungen, nur für den gewünschten Bereich, verwendet werden kann. Die Meßdaten können für Abnahmeprotokolle und zum Zwecke der Qualitätssicherung gespeichert werden.

Das erfindungsgemäße Verfahren besteht aus den folgenden Schritten :
a) Anbringen einer Temperaturerfassungseinrichtung auf dem Mantelrohrabschnitt, insbesondere Muffenbereich, dessen Verschäum-Temperatur bestimmt werden soll;
b) Feststellen der Temperatur des Mantelrohrabschnitts, insbesondere Muffenbereichs mittels der erfindungsgemäßen Vorrichtung;
c) Korrelieren der gemessenen Temperatur des Mantelrohrabschnitts, insbesondere Muffenbereichs mit der Umgebungstemperatur; und
d) daraus resultierendes Rückschließen auf den Zustand der eingebrachten PU- o. dgl. exotherm bindenden Schaumdämmung Mantelrohrabschnitts bzw. Muffenbereichs.

Eine Kalibrierung des Verfahrens zur Ermittlung von Vergleichs- bzw. Bezugsdaten erfolgt entweder durch eine Berechnung der optimalerweise zu messenden Wärmemengen anhand der zur Verfügung stehenden Daten wie z. B. Reaktionsenthalpie, Wärmeübergangs- und Wärmedurchgangskoeffizienten und dergleichen bezüglich der verwendeten Materialien, oder vorzugsweise durch einen oder mehrere Vorversuche mit den zu verwendenden Materialien.

Das Feststellen der Temperatur des betreffenden Rohrabschnitts erfolgt vorzugsweise unter Verwendung einer Temperaturmeßmatte, die einen Lichtwellenleiter zur faseroptischen Temperaturbestimmung aufweist. Gemäß einer Ausführungsform der Erfindung wird die Temperaturmessung in kontinuierlicher Weise durchgeführt, so daß zeitliche Temperaturänderungen, insbesondere durch eine graphische Aufzeichnung der gemessenen Temperaturwerte über die Zeit sichtbar werden.

Gemäß einer anderen Ausführungsform der Erfindung erfolgt eine Temperaturmessung zu festgelegten Zeitpunkten zur Überwachung des Rohrleitungssystems und insbesondere der Muffenbereiche. Um einen Bezugspunkt für eine Temperaturerhöhung bzw. -erniedrigung zu erhalten, wird die Umgebungstemperatur gemessen. Falls das vorliegende Verfahren zur Bestimmung der Temperatur während des Ausschäumvorgangs des Hohlraums zwischen Mediumrohr und Mantelrohr verwendet wird, so erfolgt das Messen der Umgebungstemperatur vorzugsweise durch eine Messung der Temperatur des betreffenden Rohrabschnitts, nachdem dieser sich nach einer u.U. angewandten Wärme- bzw. Kältebehandlung wieder an die Umgebungstemperatur angeglichen hat, für einen kurzen Zeitraum vor dem Beginn des Ausschäumvorgangs und vorzugsweise nach dem Anbringen der Temperaturmeßmatte, die auch für die nachfolgende Temperaturmessung verwendet wird. Für den Fall, daß zu befürchten ist, daß sich während des Ausschäumvorgangs die Temperatur im Umgebungsbereich der Muffe ändert und so das Meßergebnis durch eine externe Temperaturbeeinflussung beeinträchtigt, wird im Umgebungsbereich der Muffe und insbesondere an der Oberseite der Temperaturmeßmatte die jeweilige Temperatur bestimmt, wobei z. B. herkömmliche Thermometer oder Thermoelemente verwendet werden. Für den Fall, daß die Umgebungstemperatur im Umgebungsbereich des Meßbereichs drastisch abfällt oder ansteigt, so ist dies durch ein Subtrahieren oder Hinzuaddieren der sich ergebenden Temperaturdifferenz des Umgebungsbereichs des Meßbereichs zu berücksichtigen. Bei nur geringfügigen Änderungen der Umgebungstemperatur kann diese Ausgleichsrechnung unterbleiben. Falls eine Beeinflussung der Temperaturmeßwerte der Muffe durch äußere Einflüsse zu erwarten ist, wird vorzugsweise eine Mehrschicht-Temperaturmeßmatte verwendet, deren Oberseite mit einer die Wärme schlecht leitenden Isolierschicht versehen ist.

Ein weiterer Aspekt der Erfindung ist, daß die frei zugänglichen Enden von Lichtwellenleitern von benachbart angeordneten Matten vor einer Verfüllung eines Verlegegrabens optisch gekoppelt werden, um nach der Verfüllung des Verlegegrabens eine Temperaturmessung entlang des zu überwachenden Rohrleitungssystems und insbesondere der Muffenbereiche zu ermöglichen.

Mit Hilfe der erfindungsgemäßen Vorrichtung und des erfindungsgemäßen Verfahrens wird eine einfache, genaue und kostengünstige Möglichkeit geschaffen, die Qualität und den Zustand der eingebrachten, exotherm abbindenden Dämmung von Mantelrohrabschnitten, insbesondere im Muffenbereich zu kontrollieren und zu überwachen. Auf die dargelegte Weise ist es möglich, bereits während der Herstellung der Dämmung von Mantelrohren eine qualitative Aussage über den Zustand der Dämmung zu erhalten. Eine Inbetriebnahme des Rohrs bzw. eine Temperaturbeaufschlagung des Rohrs ist nicht notwendig.

### Bezugszeichenliste

- 1: Mantelrohr
- 2: Muffe
- 3: Flächengebilde (Temperaturmeßmatte)
- 4: Verbindungsbereich
- 5: Medienrohr
- 6: Dämmung (werksseitig)
- 7: Schweißnaht
- 8: Muffendämmung
- 9: Aussparung in dem Flächengebilde
- 10: Aussparung in der Muffe
- 11: Lichtwellenleiter
- 12: Klettverschluß (quer)
- 13: Aussparung in dem Flächengebilde (Loch)
- 14: Aussparung in dem Flächengebilde (Schlitz, Mittenbereich)
- 15: Klettverschluß (längs)
- 16: Aussparung in dem Flächengebilde (Schlitz, Randbereich)

## Patentansprüche

1. Vorrichtung zur Kontrolle und Überwachung der Dämmung von Mantelrohrabschnitten, insbesondere im Muffenbereich,
**gekennzeichnet durch**
ein Flächengebilde zur Temperaturmessung, wobei in dem Flächengebilde Temperatursensoren angeordnet sind.

2. Vorrichtung nach Anspruch 1,
**dadurch gekennzeichnet, daß**
das Flächengebilde die Form einer textilen oder kunststoffgewirkten Temperaturmeßmatte (3) aufweist.

3. Vorrichtung nach Anspruch 2,
**dadurch gekennzeichnet, daß**
die Temperaturmeßmatte (3) flexibel und wickelbar ausgebildet ist.

4. Vorrichtung nach einem der Ansprüche 2 oder 3,
**dadurch gekennzeichnet, daß**
die Querränder der Temperaturmeßmatte (3) mittels eines Verschlußmechanismus ringförmig verbindbar sind.

5. Vorrichtung nach einem der vorhergehenden Ansprüche,
**dadurch gekennzeichnet, daß**
der Verschlußmechanismus aus einem oder mehreren der folgenden Mechanismen besteht:
- einem Klettverschluß,
- Druckknöpfen,
- einem Reißverschluß,
- einem wieder lösbaren Klebstoff,
- Haken und Ösen,
- einem Riemen,
- einem Überzug,
- Klammern.

6. Vorrichtung nach einem der Ansprüche 2 - 5,
**dadurch gekennzeichnet, daß**
die Temperaturmeßmatte (3) außenumfangsseitig im Muffenbereich oder Mantelrohrabschnitt befestigt ist.

7. Vorrichtung nach einem der Ansprüche 2 - 6,
**dadurch gekennzeichnet, daß**
die Temperaturmeßmatte (3) mindestens eine Ausnehmung in der Form einer Öffnung oder Schlitzes aufweist.

8. Vorrichtung nach einem der Ansprüche 2 - 7,
**dadurch gekennzeichnet, daß**
die Temperaturmeßmatte (3) einschichtig ausgebildet ist.

9. Vorrichtung nach einem der vorhergehenden Ansprüche 2 - 7,
**dadurch gekennzeichnet, daß**
die Temperaturmeßmatte (3) mehrschichtig ausgebildet ist.

10. Vorrichtung nach Anspruch 9,
**dadurch gekennzeichnet, daß**
die Unterseite der Temperaturmeßmatte (3) und die Oberseite der Temperaturmeßmatte (3) aus Materialien mit einer unterschiedlichen Wärmeleitfähigkeit bestehen.

11. Vorrichtung nach einem der vorhergehenden Ansprüche 10,
**dadurch gekennzeichnet, daß**
die Unterseite der Temperaturmeßmatte (3) aus einem gut wärmeleitenden Material besteht, und die Oberseite der Temperaturmeßmatte (3) aus einem wärmeisolierenden Material besteht.

12. Vorrichtung nach einem der vorhergehenden Ansprüche,
**dadurch gekennzeichnet, daß**
die Temperaturerfassungseinrichtung eine faseroptische Temperaturerfassungseinrichtung ist, die mindestens einen Lichtwellenleiter aufweist, in den ein Laserimpuls eingespeist wird, dessen zurückgestreute Strahlung zur Temperaturmessung spektral und/oder laufzeitabhängig ausgewertet wird, wobei zumindest ein Ende des Lichtwellenleiters außerhalb der Temperaturmeßmatte (3) frei zugänglich ist.

13. Vorrichtung nach Anspruch 12,
**dadurch gekennzeichnet, daß**
die von außen zugänglichen Enden eines Lichtwellenleiters einer Matte jeweils an die von außen zugänglichen Enden eines Lichtwellenleiters einer benachbarten Matte optisch ankoppelbar sind.

14. Vorrichtung nach einem der Ansprüche 1 - 11,
**dadurch gekennzeichnet, daß**
die Temperaturerfassungseinrichtung aus einer Mehrzahl von Thermoelementen besteht.

15. Flächengebilde zur Temperaturmessung, das Temperatursensoren enthält,
**dadurch gekennzeichnet, daß**
das Flächengebilde zur Temperaturmessung zum Zweck der Kontrolle und Überwachung der Dämmung von Mantelrohrabschnitten, insbesondere im Muffenbereich verwendet wird.

16. Verfahren zur Kontrolle und Überwachung der Dämmung von Mantelrohrabschnitten, insbesondere im Muffenbereich,
**dadurch gekennzeichnet, daß**
es die folgenden Schritte umfaßt:
a. Anbringen einer Temperaturerfassungseinrichtung auf dem Mantelrohrabschnitt und in bekannter Weise erfolgendes Einbringen einer exotherm härtenden Schaumdämmung,
b. Feststellen der Temperatur des Mantelrohrabschnitts mindestens während der chemischen Reaktionsphase der Schaumdämmung,
c. Vergleichen der gemessenen Temperatur des Mantelrohrabschnitts mit der gemessenen Umgebungstemperatur, und
d. daraus resultierendes Schließen auf den Zustand der Dämmung.

17. Verfahren nach Anspruch 16,
**dadurch gekennzeichnet, daß**
die festgestellte Temperatur des Mantelrohrabschnitts aufgezeichnet wird.

18. Verfahren nach einem der Ansprüche 16 - 17,
**dadurch gekennzeichnet, daß**
das Feststellen der Temperatur des Mantelrohrabschnitts kontinuierlich erfolgt.

19. Verfahren nach Anspruch 16,
**dadurch gekennzeichnet, daß**
eine Temperaturkalibrierung erfolgt.

20. Verfahren nach einem der Ansprüche 16 - 19,
**dadurch gekennzeichnet, daß**
die Kalibrierung anhand von thermodynamischen Daten der verwendeten Schaumdämmmaterialien rechnerisch durchgeführt wird.
